# EUROPEAN PATENT APPLICATION

(11) **EP 3 267 670 A1**
(43) Date of publication of application: **10.01.2018**
(21) Application number: 17180131.9
(22) Date of filing: 06.07.2017

(54) **ELECTRONIC DEVICE INCLUDING DUAL CAMERA AND METHOD FOR CONTROLLING DUAL CAMERA**

(30) Priority: 06.07.2016 KR 20160085766
(71) Applicant: Samsung Electronics Co., Ltd., Gyeonggi-do 16677 (KR)
(72) Inventor: KIM, Young Min, Seoul 03431 (KR); YOO, Sug Woo, Gyeonggi-do 18444 (KR); KIM, Kwang Young, Gyeonggi-do 16953 (KR); KIM, Dong Su, Gyeonggi-do 14066 (KR); KIM, Byoung Woo, Seoul 04154 (KR); KIM, Hyun Soo, Gyeonggi-do 14568 (KR); RYU, Su Jin, Gyeonggi-do 16384 (KR)
(74) Representative: HGF Limited

(57) **Abstract**

An electronic device includes a sensor module, a dual camera including a first image sensor and a second image sensor, and a controller that processes first image data and second image data. The controller allows at least one of the first image sensor and the second image sensor to maintain a power restricted state based on at least one of a first condition associated with information extracted from the first image data or the second image data, a second condition associated with sensing information collected by the sensor module, and a third condition associated with a zoom characteristic of each of a plurality of lenses, a respective one of the plurality of lenses being mounted in each of the first image sensor and the second image sensor.

## Description

### PRIORITY

This application claims priority of a to Korean Patent Application No. 10-2016-0085766, filed in the Korean Intellectual Property Office on July 6, 2016, the entire disclosure of which is incorporated herein by reference.

### BACKGROUND OF THE INVENTION

### 1. Field of the Invention

The present disclosure relates generally to an electronic device including a dual camera and a method for controlling the dual camera, and more particularly, to a method for controlling power associated with individual image sensors of a dual camera based on specified conditions.

### 2. Background of the Invention

An electronic device such as a smartphone, a tablet personal computer (PC), or the like may include a camera module. The camera module may collect image data through a lens. The collected image data may be stored in a memory of the electronic device or may be output through a display thereof.

The electronic device may be equipped with a dual camera. The dual camera may collect image data through two image sensors (or lenses) disposed to be spaced apart from each other. The image sensors may capture the same subject at different angles depending on different settings. The electronic device equipped with the dual camera may generate an image having characteristics (e.g., high quality, wide field of view, a stereoscopic picture, and the like), which are different from characteristics of an image captured by a single camera, by composing the images captured at the different angles.

A conventional electronic device including the dual camera always operates two image sensors at the same time. In this case, since a current consumed by image sensors increases, a battery of the electronic device may be consumed rapidly.

In addition, the conventional electronic device may operate only one image sensor of the two image sensors depending on an internal/external condition or may operate the two image sensors at the same time. In this case, since shutter lag occurs in a switching procedure, it may be difficult to efficiently control the dual camera.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below.

In accordance with an aspect of the present disclosure, an electronic device includes a memory, a display, a sensor module that senses an internal state or an external state of the electronic device, and a dual camera including a first image sensor and a second image sensor. The electronic device also includes a first pipeline that processes first image data collected by the first image sensor, and a second pipeline that processes second image data collected by the second image sensor. The electronic device further includes a controller configured to process the first image data and the second image data. The controller is also configured to allow at least one of the first image sensor and the second image sensor to maintain a power restricted state based on at least one of a first condition associated with information extracted from the first image data or the second image data, a second condition associated with sensing information collected by the sensor module, and a third condition associated with a zoom characteristic of each of a plurality of lenses. A respective one of the plurality of lenses is mounted in each of the first image sensor and the second image sensor.

In accordance with another aspect of the present disclosure, a camera controlling method, which is performed by an electronic device including a first image sensor and a second image sensor, is provided. Image data is collected by using one of the first image sensor and the second image sensor, and the other of the first image sensor and the second image sensor is allowed to maintain a specified power restricted state. A first condition associated with information extracted from first image data collected by the first image sensor or second image data collected by the second image sensor, a second condition associated with sensing information collected by a sensor module included in the electronic device, and a third condition associated with a zoom characteristic of each of a plurality of lenses, a respective one of the plurality of lenses being mounted in each of the first image sensor and the second image sensor, are verified. Image data is collected by using both the first image sensor and the second image sensor if at least one of the first condition, the second condition, or the third condition is satisfied.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating an electronic device including a dual camera, according to an embodiment of the present disclosure;
FIG. 2 is a block diagram illustrating a pipeline transmitting image data, according to an embodiment of the present disclosure;
FIG. 3 is a flowchart illustrating a method for controlling a dual camera, according to an embodiment of the present disclosure;
FIG. 4 is a flowchart illustrating a dual camera control method depending on brightness, according to an embodiment of the present disclosure;
FIG. 5 is a flowchart illustrating a method for controlling a dual camera by using sensing information of proximity sensor, according to an embodiment of the present disclosure;
FIG. 6 is a flowchart illustrating a method for controlling a dual camera using a dual zoom lens, according to an embodiment of the present disclosure;
FIG. 7A is a flowchart illustrating a power interrupting state of a second image sensor, according to an embodiment of the present disclosure;
FIG. 7B is a signal flow diagram in a power interrupting state of a second image sensor, according to an embodiment of the present disclosure;
FIG. 8A is a flowchart illustrating a streaming restriction state of a second image sensor, according to an embodiment of the present disclosure;
FIG. 8B is a signal flow diagram in a streaming restriction state of a second image sensor, according to an embodiment of the present disclosure;
FIG. 9A is a flowchart illustrating a method for controlling a second image sensor by using a retention mode, according to an embodiment of the present disclosure;
FIG. 9B is a signal flow diagram in a retention mode of a second image sensor, according to an embodiment of the present disclosure;
FIG. 10A is a flowchart illustrating a method for controlling a second image data through control of a pipeline, according to an embodiment of the present disclosure;
FIG. 10B is a signal flow diagram for describing control of second image data through control of a pipeline, according to an embodiment of the present disclosure;
FIGS. 11A and 11B are a flowchart and a signal flow diagram for describing control of a second image sensor by changing a frame rate, according to an embodiment of the present disclosure;
FIGS. 12A and 12B are a flowchart and a signal flow diagram for describing control of a second image sensor by changing a resolution, according to an embodiment of the present disclosure;
FIG. 13 is a diagram illustrating an electronic device in a network environment, according to an embodiment of the present disclosure; and
FIG. 14 is a block diagram illustrating an electronic device, according to an embodiment of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

Embodiments of the present disclosure are described in detail with reference to the accompanying drawings. The same or similar components may be designated by the same or similar reference numerals although they are illustrated in different drawings. Detailed descriptions of constructions or processes known the art may be omitted to avoid obscuring the subject matter of the present disclosure.

Herein, the expressions "have", "may have", "include", "comprise", "may include", and "may comprise" indicate the existence of corresponding features (for example, elements such as numeric values, functions, operations, or components) but do not exclude presence of additional features.

Herein, the expressions "A or B", "at least one of A or/and B", "one or more of A or/and B", and the like may include any and all combinations of one or more of the associated listed items. For example, the term "A or B", "at least one of A and B", or "at least one of A or B" may refer to all of the case (1) where at least one A is included, (2) where at least one B is included, or (3) where both of at least one A and at least one B are included.

Terms, such as "first", "second", and the like, as used herein, may refer to various elements of various embodiments of the present disclosure, but do not limit the elements. For example, such terms are used only to distinguish an element from another element and do not limit the order and/or priority of the elements. For example, a first user device and a second user device may represent different user devices irrespective of sequence or importance. For example, without departing the scope of the present disclosure, a first element may be referred to as a second element, and similarly, a second element may be referred to as a first element.

It will be understood that when an element (for example, a first element) is referred to as being "(operatively or communicatively) coupled with/to" or "connected to" another element (for example, a second element), it can be directly coupled with/to or connected to the other element or an intervening element (for example, a third element) may be present. In contrast, when an element (for example, a first element) is referred to as being "directly coupled with/to" or "directly connected to" another element (for example, a second element), it should be understood that there are no intervening elements (for example, a third element).

The expression "configured to", as used herein, may be interchangeably used with the expressions "suitable for", "having the capacity to", "designed to", "adapted to", "made to", or "capable of". The term "configured to (or set to)" does not mean only "specifically designed to" in hardware. Instead, the expression "a device configured to" may mean that the device is "capable of" operating together with another device or other components. CPU, for example, a "processor configured to (or set to) perform A, B, and C" may mean a dedicated processor (for example, an embedded processor) for performing a corresponding operation or a generic-purpose processor (for example, a central processing unit (CPU) or an application processor) which may perform corresponding operations by executing one or more software programs which are stored in a memory device.

Terms used herein describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meanings as those that are generally understood by a person skilled in the art. It will be further understood that terms, which are defined in a dictionary and commonly used, should also be interpreted as is customary in the relevant related art and not in an idealized or overly formal manner unless expressly so defined herein in various embodiments of the present disclosure. In some cases, even if terms are defined in the specification, they may not be interpreted to exclude embodiments of the present disclosure.

An electronic device, according to various embodiments of the present disclosure, may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), MP3 players, mobile medical devices, cameras, and wearable devices. According to various embodiments of the present disclosure, the wearable devices may include accessories (for example, watches, rings, bracelets, ankle bracelets, glasses, contact lenses, or head-mounted devices (HMDs)), cloth-integrated types (for example, electronic clothes), body-attached types (for example, skin pads or tattoos), or implantable types (for example, implantable circuits).

In some embodiments of the present disclosure, the electronic device may be a home appliance. Home appliances may include, for example, at least one of a digital versatile disc (DVD) player, an audio, a refrigerator, an air conditioner, a cleaner, an oven, a microwave oven, a washing machine, an air cleaner, a set-top box, a home automation control panel, a security control panel, a TV box, a game console, an electronic dictionary, an electronic key, a camcorder, or an electronic panel.

In another embodiment of the present disclosure, the electronic device may include at least one of various medical devices (for example, various portable medical measurement devices (a blood glucose meter, a heart rate measuring device, a blood pressure measuring device, and a body temperature measuring device), a magnetic resonance angiography (MRA), a magnetic resonance imaging (MRI) device, a computed tomography (CT) device, a photographing device, and an ultrasonic device), a navigation system, a global navigation satellite system (GNSS), an event data recorder (EDR), a flight data recorder (FDR), a vehicular infotainment device, electronic devices for vessels (for example, a navigation device for vessels and a gyro compass), avionics, a security device, a vehicular head unit, an industrial or home robot, an automatic teller machine (ATM) of a financial company, a point of sales (POS) device of a store, or an Internet of Things (IoT) (for example, a light bulb, various sensors, an electricity or gas meter, a spring cooler device, a fire alarm device, a thermostat, an electric pole, a toaster, a sporting apparatus, a hot water tank, a heater, a boiler, etc.).

The electronic device may include at least one of furniture or a part of a building/structure, an electronic board, an electronic signature receiving device, a projector, or various measurement devices (for example, a water service, electricity, gas, or electric wave measuring device). The electronic device may be one or a combination of the aforementioned devices. The electronic device may be a flexible electronic device. Further, the electronic device is not limited to the aforementioned devices, but may include new electronic devices.

The term "user", as used herein, may refer to a person who uses an electronic device or may refer to a device (for example, an artificial intelligence electronic device) that uses an electronic device.

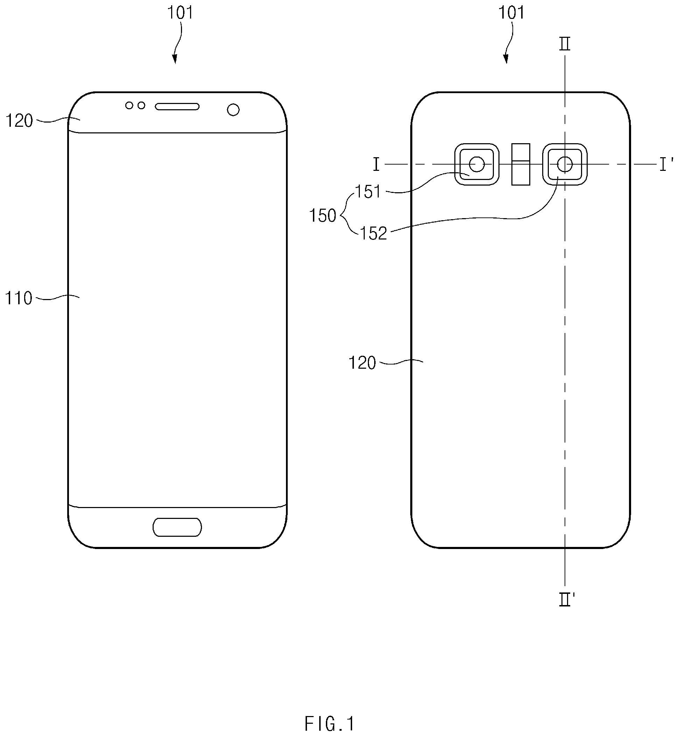

FIG. 1 is a diagram illustrating an electronic device including a dual camera, according to an embodiment of the present disclosure.

Referring to FIG. 1, an electronic device 101 includes a display 110, a housing 120, and a dual camera 150 on the outer surface thereof. In addition, the electronic device 101 may further include a button, a sensor, a microphone, or the like.

The display 110 may output various contents provided to a user and may receive a user input through a touch input. According to various embodiments, the display 110 may output a preview image based on image data collected through the dual camera 150. For example, the user may execute a camera app. While verifying the preview image output through the display 110 in real time, the user may photograph a photo or a video.

The housing 120 may mount the display 110, the dual camera 150, a peripheral button mount around, and the like on the outer surface thereof, and may mount a processor, a module, a sensor, a circuit board, and the like for driving the electronic device 101 in the inside thereof. In FIG. 1, the dual camera 150 is illustrated as being mounted on a rear surface of the housing 120 (a surface opposite to a surface on which the display 110 is disposed). However, the embodiments of the present invention may not be limited thereto. For example, the dual camera 150 may be mounted on the front surface (a surface on which the display 110 is disposed) of the housing 120.

The dual camera 150 includes a first image sensor 151 (or a first camera module) and a second image sensor 152 (or a second camera module). The first image sensor 151 and the second image sensor 152 may be disposed to maintain a specified distance therebetween (e.g., 2cm). In FIG. 1, the first image sensor 151 and the second image sensor 152 are illustrated as being disposed along an axis I-I'. However, embodiments of the present invention may not be limited thereto. For example, the first image sensor 151 and the second image sensor 152 may be disposed depending on an axis II-II' perpendicular to the axis I-I'.

The first image sensor 151 and the second image sensor 152 may have different operating characteristics. For example, the first image sensor 151 may be a RGB sensor and may collect a color image. The second image sensor 152 may be a mono sensor and may collect a gray scale image. As another example, since the first image sensor 151 includes a wide-angle lens, the first image sensor 151 may be suitable for photographing a subject at a close distance. Since the second image sensor 152 includes a telephoto lens, the second image sensor 152 may be suitable for photographing a subject at a long distance.

According to an embodiment, while operating at the same time, the first image sensor 151 and the second image sensor 152 may collect pieces of image data, respectively (a dual input mode). In the dual input mode, the first image sensor 151 may collect first image data, and the second image sensor 152 may collect second image data at the same time. Each of the collected first image data and second image data may be provided to a controller (e.g., a processor or an application processor (AP)) in the electronic device 101. The controller may synchronize and combine the first image data and the second image data. The controller may generate a preview image output in the display 110 based on the combined image data or may store the combined image in a memory.

According to another embodiment, one of the first image sensor 151 and the second image sensor 152 may collect image data and the other image sensor thereof may maintain an operation restricted state (e.g., a power-off state, an output restricted state, a resolution restricted state, or the like) (a single input mode). For example, the first image sensor 151 may be in a state where the first image data is streamed to a controller after power is supplied, and the second image sensor 152 may be in a state where the second image data is not collected because the power is interrupted. The controller may output a preview image output in the display 110 based on the first image data, or may change the first image data into an image file and may store the image file in the memory.

When the electronic device 101 operates in a dual input mode, available image data may increase because each of the first image sensor 151 and the second image sensor 152 collects image data. In the dual input mode, the electronic device 101 may power each of the first image sensor 151 and the second image sensor 152 and may process first image data and second image data. Accordingly, the power consumption of the dual input mode may be greater than that of the single input mode.

Each of the first image sensor 151 and the second image sensor 152 may operate in the single input mode or the dual input mode depending on a control signal of the inside of the electronic device 101. The electronic device 101 may reduce current consumption by changing into the single input mode or the dual input mode depending on ambient environment, internal settings, or the like. Additional information about a method for controlling the first image sensor 151 and the second image sensor 152 is described below.

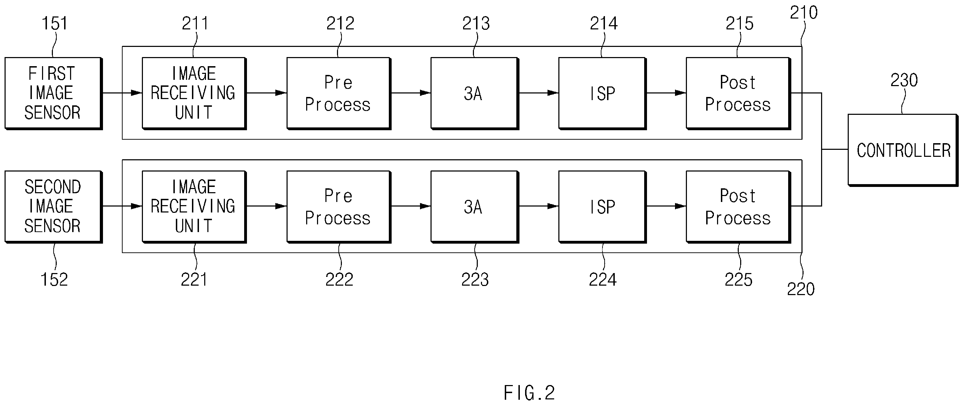

FIG. 2 is a block diagram illustrating a pipeline transmitting image data, according to an embodiment of the present disclosure.

Referring to FIG. 2, the first image sensor 151 is connected to a controller 230 through a first pipeline 210. First image data collected by the first image sensor 151 may be transmitted to the controller 230 through the first pipeline 210.

The first pipeline 210 includes an image receiving unit 211, a pre-processor 212, an auto-processor 213, an image signal processor (ISP) 214, and a post-processor 215.

The image receiving unit 211 may interface with the first image sensor 151 and may receive the collected first image data. The image receiving unit 211 may store the first image data in a buffer or a memory.

The pre-processor 212 may perform data conversion or the like for the auto-processor 213 and the ISP 214.

The auto-processor 213 may perform operations such as auto focus (AF), auto exposure (AE), automatic white balance (AWB), and the like. The auto-processor 213 may adjust the AF, the AE, and the AWB based on the collected first image data. The AE may be a function of automatically adjusting an analog gain and an exposure time of a photo-pixel by analyzing a luminous component where a color space conversion is performed. The AWB may be a function of automatically correcting a color distorted depending on the intrinsic wavelength of the light source.

The ISP 214 may perform black level conversion (BLC), color interpolation, color correction, color space conversion, gamma correction, image formatter, or the like. The BLC may be a function of improving image quality by detecting a dark current and a fixed pattern noise. The color interpolation may be a function of generating an image that is implemented with RGB primary colors per pixel. The color correction may be a function of correcting the color distortion due to an optical transmission characteristic of the lens, an optical transmission characteristic of a color filter for expressing a color, and the light collection efficiency of an RGB photo diode.

The post-processor 215 may perform interface for transmitting the first image data to the controller 230.

The second image sensor 152 is connected to the controller 230 through a second pipeline 220. Second image data collected by the second image sensor 152 is transmitted to the controller 230 through the second pipeline 220.

The second pipeline 220 includes an image receiving unit 221, a pre-processor 222, an auto-processor 223, an ISP 224, and a post-processor 225. The function of a configuration included in the second pipeline 220 may be the same as the function of a configuration corresponding to the first pipeline 210.

The controller 230 may separately or integrally process the first image data transmitted through the first pipeline 210 and the second image data transmitted through the second pipeline 220. The controller 230 may generate a preview image output through the display 110 by using the first image data or the second image data. The controller 230 may combine the first image data and the second image data depending on a specified algorithm or a condition. For example, the controller 230 may apply the second image data to a low-illuminance area of an image photographing a subject and may use the first image data with respect to other areas.

The controller 230 may switch to a dual input mode or a single input mode by controlling a power signal, a control signal, or the like associated with each of the first image sensor 151 and the second image sensor 152. In addition, the controller 230 may switch to the dual input mode or the single input mode by controlling each of chips or each of modules that constitutes the first pipeline 210 and the second pipeline 220.

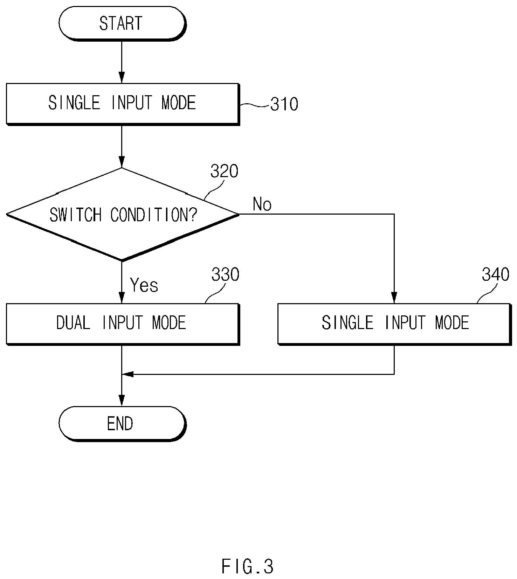

FIG. 3 is a flowchart illustrating a method for controlling a dual camera, according to an embodiment of the present disclosure.

Referring to FIG. 3, in step 310, the controller 230 collects image data by using one of the first image sensor 151 or the second image sensor 152 (a single input mode). While the other image sensor maintains an operation restricted state (e.g., a power-off state, an output restricted state, a resolution restricted state, or the like), the controller 230 may collect image data by using one image sensor depending on default settings or the selection of a user, thereby reducing power consumption.

For example, in the case where the user starts a camera app, the controller 230 may collect first image data by providing a power signal and a control signal to the first image sensor 151 being an RGB sensor. The controller 230 may output a preview image to the display 110 by using the first image data. In the case where a user input (e.g., a screen touch, a button input, a gesture input, or the like) for capturing an image occurs, the controller 230 may store the captured image in a memory. In this case, the controller 230 may prevent the second image sensor 152 from collecting image data by interrupting power supply to the second image sensor 152 being a mono sensor.

Hereinafter, in a single input mode, it is described that the first image sensor 151 is in an operating state (a state where image data is collected and is streamed through a pipeline) and the second image sensor 152 is in the operation restricted state (e.g., the power-off state, the output restricted state, the resolution restricted state, or the like). However, embodiments of the present invention may not be limited thereto.

In step 320, the controller 230 determines whether a condition (hereinafter, "switch condition") in which the single input mode is switched to a dual input mode is satisfied, depending on ambient environment, internal settings, or the like of the electronic device 101. The switch condition may be a preset condition associated with the internal/external environment of the electronic device 101 and may be a condition in which the operation restricted state (e.g., the power-off state, the output restricted state, the resolution restricted state, or the like) of the second image sensor 152 is switched into the operating state (a state where the image data is streamed) in the single input mode.

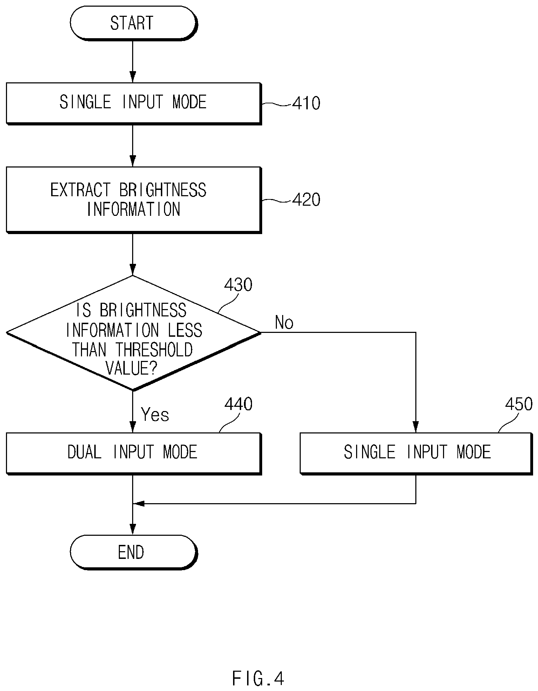

The switch condition may be set based on at least one of a condition associated with information (e.g., brightness information) extracted from the first image data, a condition associated with sensing information (e.g., irradiance responsivity (IR) measured by a proximity sensor) collected from a sensor module included in the electronic device 101, a condition associated with a zoom characteristic of a lens mounted in each of the first image sensor and the second image sensor. Additional information about the switch condition is described in greater detail below with reference to FIGS. 4 to 6.

In step 330, in the case where the switch condition is satisfied, the controller 230 operates in the dual input mode in which the first image data and the second image data are collected by using each of the first image sensor 151 and the second image sensor 152. The controller 230 may combine the first image data and second image data so as to generate the preview image. In the case where a user input (e.g., a screen touch, a button input, a gesture input, or the like) for capturing an image occurs, the controller 230 may synchronize and combine images captured by image sensors with each other so as to generate the combined image (e.g., a photo or a video). The combined image generated in the dual input mode may be an image to which various effects (e.g., high quality, wide field of view, low-illuminance area correction, or the like) are more applied than the image captured in the single input mode.

In step 340, in the case where the switch condition is not satisfied, the controller 230 operates in the single input mode as in step 310. The first image sensor 151 may maintain the operating state, and the second image sensor 152 may maintain the operation restricted state.

FIG. 4 is a flowchart illustrating a dual camera control method depending on brightness, according to an embodiment of the present disclosure. Hereinafter, in a single input mode, the first image sensor 151 is described as being in an operating state. However, embodiments of the present invention may not be limited thereto.

Referring to FIG. 4, in step 410, the controller 230 collects first image data by using the first image sensor 151. The second image sensor 152 may maintain an operation restricted state (e.g., a power-off state, an output restricted state, a resolution restricted state, or the like) (a single input mode).

In step 420, the controller 230 extracts brightness information from the first image data. The controller 230 calculates ambient brightness (e.g., a luminance value (LV)) by using statistics data of the auto-processor 213 of the first pipeline 210.

In step 430, the controller 230 compares the extracted brightness information with a preset threshold value. The threshold value may be determined in advance and stored depending on the operating characteristics or the like of the first image sensor 151 and the second image sensor 152.

In step 440, in the case where the brightness information is less than the threshold value, the controller 230 changes the state of the second image sensor 152 into the operating state so as to switch to the dual input mode. In a low-illuminance environment in which the quality of image data is capable of decreasing, the controller 230 may collect image data of quality obtained through the dual input mode higher than image data of quality obtained through the single input mode.

In step 450, in the case where the brightness information is not less than the threshold value, the controller 230 maintains the single input mode. The controller 230 may maintain the single input mode in a state where the periphery of the electronic device 101 is bright, and thus the current consumption may be reduced.

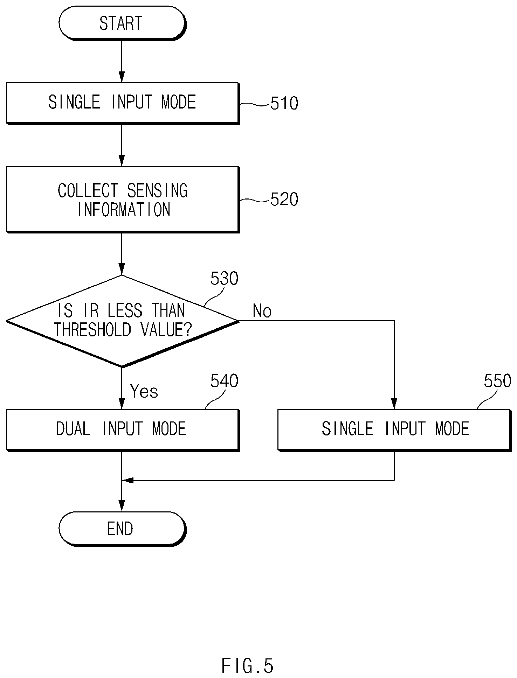

FIG. 5 is a flowchart for describing a method for controlling a dual camera by using sensing information of proximity sensor, according to an embodiment of the present disclosure.

Referring to FIG. 5, in step 510, the controller 230 collects first image data by using the first image sensor 151. The second image sensor 152 may maintain an operation restricted state (e.g., a power-off state, an output restricted state, a resolution restricted state, or the like) (a single input mode).

In step 520, the controller 230 collects sensing information for recognizing a user or an ambient object, by using a sensor module (e.g., a proximity sensor) in the electronic device 101. For example, the controller 230 may obtain the IR reflected from a subject by using the proximity sensor and may recognize an operation such as the proximity of a user, execution of a button, or the like. Hereinafter, sensing information of a proximity sensor is exemplified as being used. However, embodiments of the present invention may not be limited thereto.

In step 530, the controller 230 compares the collected IR with the preset threshold value. The threshold value may be determined in advance and stored depending on the operating characteristics of the first image sensor 151 and the second image sensor 152 and the operating characteristics of the sensor module.

In step 540, in the case where the collected IR is less than the threshold value, the controller 230 changes the state of the second image sensor 152 into the operating state so as to switch to the dual input mode. The controller 230 may collect high-quality image data by switching to the dual input mode in a state where there is high possibility that a photographing is started by the proximity of a user, execution of a button, or the like.

In step 550, in the case where the collected IR is not less than the threshold value, the controller 230 maintains the single input mode. In the case where there is low possibility that a photographing is started because there is no proximity of the user, the controller 230 may maintain the single input mode, and thus current consumption may be reduced.

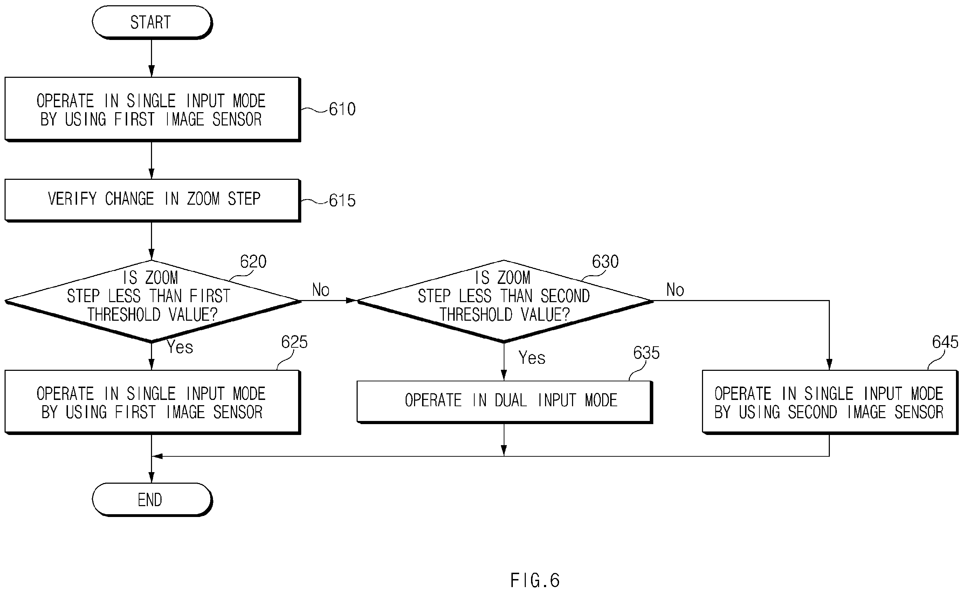

FIG. 6 is a flowchart for describing a method for controlling a dual camera using a dual zoom lens, according to an embodiment of the present disclosure.

Referring to FIG. 6, in step 610, the controller 230 collects first image data through a first zoom lens (e.g., a wide-angle lens) mounted in the first image sensor 151. A second zoom lens (e.g., a telephoto lens) may be mounted in the second image sensor 152, and the second image sensor 152 may maintain an operation restricted state (e.g., a power-off state, an output restricted state, a resolution restricted state, or the like) (a single input mode).

For example, a wide-angle lens for photographing at a close distance may be mounted in the first image sensor 151, and the telephoto lens for photographing a subject at a long distance may be mounted in the second image sensor 152.

In step 615, the controller 230 verifies the change in a zoom step. The zoom step may be changed through user selection or may be automatically changed depending on a photographing manner.

In step 620, the controller 230 compares the zoom step with the preset first threshold value. The first threshold value may be determined in advance depending on the characteristics of the first image sensor 151 and the first zoom lens.

In step 625, in the case where the zoom step is less than the first threshold value, the controller 230 operates in the single input mode by using the first image sensor 151. The controller 230 may allow the second image sensor 151 to maintain an operation restricted state. For example, the first threshold value may be x1.6 ratio, and the controller 230 may maintain the single input mode in which the first image sensor 151 is used, in the zoom step of x1.6 ratio or less.

In step 630, in the case where the zoom step is not less than the first threshold value, the controller 230 compares the zoom step with a preset second threshold value. The second threshold value may be determined in advance depending on the characteristics of the second image sensor 152 and the second zoom lens. The second threshold value (e.g., x2.2) may be greater than the first threshold value (e.g., x1.6).

In step 635, in the case where the zoom step is not less than the first threshold value and is less than the second threshold value, the controller 230 operates in the dual input mode by using the first image sensor 151 and the second image sensor 152. For example, in the case where an input of a wide-angle lens is switched to an input of a telephoto lens, since the field of view is changed, a screen may be unnaturally changed. The controller 230 may operate in the dual input mode during an interval in which a lens type is changed, and thus the controller 230 may allow the user to recognize natural and successive screen change.

For example, in the dual input mode, the controller 230 may compose input images of a wide-angle lens and a telephoto lens during an interval in which a lens type is changed. The first image data and the second image data may be combined and processed, and a photo or a video to which the change of a zoom lens is naturally applied may be output or stored.

In step 645, in the case where the zoom step is not less than the second threshold value, the controller 230 operates in the single input mode by using the second image sensor 152. In this case, the controller 230 allows the first image sensor 151 to maintain an operation restricted state.

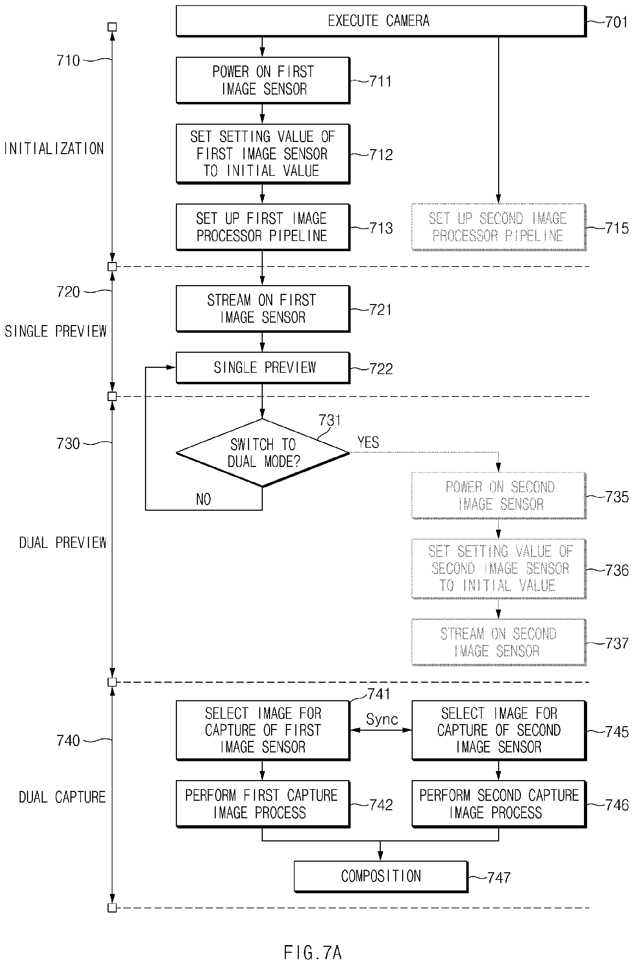

FIG. 7A is a flowchart for describing a power interrupting state of a second image sensor, according to an embodiment of the present disclosure.

Referring to FIG. 7A, in an initialization step 710, the controller 230 performs default setting for collecting first image data through the first image sensor 151 and the first pipeline 210. In step 711, a power signal is provided to the first image sensor 151. In step 712, the setting value of the first image sensor 151 is set to an initial value through a reset signal. In step 713, the state of each of elements included in the first pipeline 210 is set to an initial state.

In the initialization step 710, the second image sensor 152 may be in a power interrupting state where separate power is not supplied thereto. For example, a VDD power pin for driving the second image sensor 152 may maintain a low state. In this case, the second image sensor 152 may be in a state where no other control signals are input thereto. In step 715, the state of each of elements included in the second pipeline 220 may be set to an initial state.

In a single preview step 720, the first image sensor 151 is in a state where a first image data is collected. In step 721, the first image sensor 151 streams the collected first image data through the first pipeline 210. The first image data may be transmitted to the controller 230 through the first pipeline 210. In step 722, the controller 230 generates a single preview image based on the first image data and may output the single preview image to the display 110. According to various embodiments, the single preview image may be the changed (e.g., down-sized or filtered) image based on a characteristic (e.g., a size, a resolution, or the like) of the display 110.

The second image sensor 152 may be in a state where power is interrupted and may be in a state where separate image data is not streamed. The second image sensor 152 may not provide image data to generate the preview image.

In the single input mode, since power is not provided to the second image sensor 152, current consumption may not occur.

In a dual preview step 730, the controller 230 determines whether a switch condition (e.g., a brightness condition, a zoom step condition, or the like) for switching from the single mode to the dual mode is satisfied, in step 731. If it is determined that the switch condition is satisfied, the controller 230 provides the second image sensor 152 with power and control signals.

In step 735, the controller 230 provides the second image sensor 152 with the power signal. For example, the state of a VDD power pin for driving the second image sensor 152 may switch from a low state to a high state. In step 736, the controller 230 allows the setting value of the second image sensor 152 to be set to an initial value through a reset signal. In step 737, the second image sensor 152 collects second image data and streams the collected second image data through the second pipeline 220. The controller 230 generates a dual preview image based on the first image data and the second image data and may output the dual preview image to the display 110.

In a dual capture step 740, in the case where a user input (e.g., a screen touch, a button input, a gesture input, or the like) for capturing an image occurs, the controller 230 selects images captured by each of image sensors in step 741 and step 745. In step 742 and step 746, the controller 230 synchronizes a first capture image captured by the first image sensor 151 and a second capture image captured by the second image sensor 152, and performs image processing through each of pipelines.

In step 747, the controller 230 generates the combined image (e.g., a photo or a video) by combining the processed first capture image and the processed second capture image.

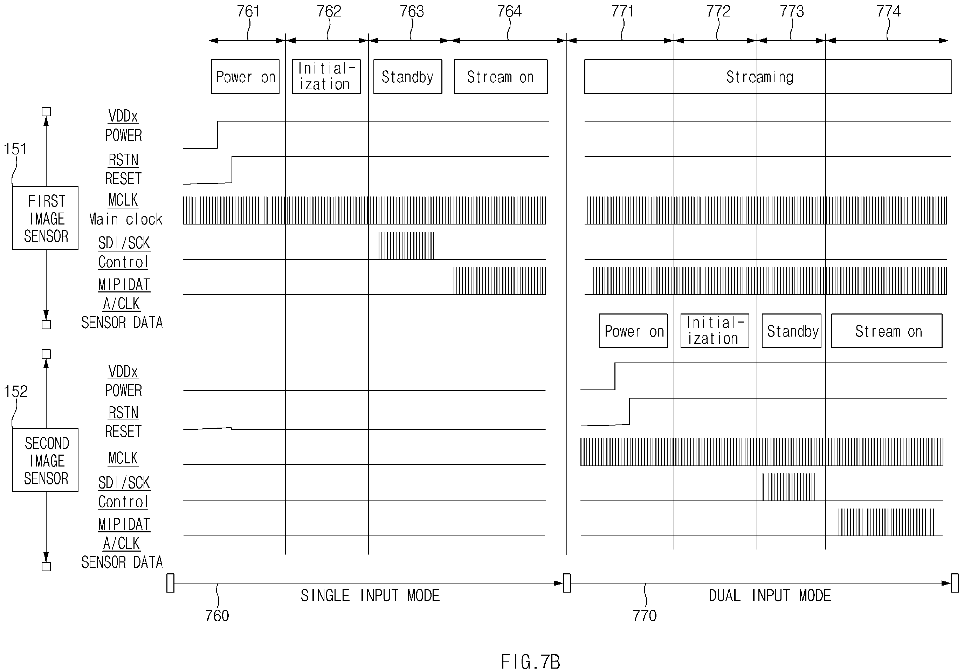

FIG. 7B is a signal flow diagram in a power interrupting state of a second image sensor, according to an embodiment of the present disclosure.

Referring to FIG. 7B, in an interval of a single input mode 760, the controller 230 may allow a streaming signal(e.g., MIPIDATA/CLK) to be generated, by providing a power signal(e.g., VDDx) and control signals(a main clock signal(e.g., MCLK), a reset signal(e.g., RSTN), and a standby signal(e.g., SDI/SCK Control)) to the first image sensor 151. On the other hand, the controller 230 may prevent a power signal and a separate control signal or a timing signal from being input to the second image sensor 152. The second image sensor 152 may be in a state where the streaming of image data does not occur and the second image sensor 152 does not participate in a preview, image capture, or the like.

In a power input interval 761, the clock signal MCLK may be input to the first image sensor 151 with a specified period. The state of the power VDDx may be changed from a low state to a high state. Immediately after power is applied thereto, the state of the reset signal may be changed from a low state to a high state.

In an initialization interval 762, the reset signal may maintain a high state during a specified time period such that the first image sensor 151 is initialized.

In a streaming standby interval 763, information about the characteristic of the first image data to be streamed may be provided. For example, a resolution, an image size, zoom information, or the like of the collected image data may be provided.

In a streaming interval 764, the first image sensor 151 may stream first image data. The first image data may be transmitted to the controller 230 through the first pipeline 210.

In an interval of a dual input mode 770, the first image sensor 151 may continuously stream the first image data. On the other hand, after the power signal VDDx and the control signals MCLK, RSTN, and SDI/SCK Control are input, the state of the second image sensor 152 may be changed to a state where the streaming MIPIDATA/CLK is generated.

The operation of the second image sensor 152 in the interval of the dual input mode 770 may be the same as or similar to the operation of the first image sensor 151 in the interval of the single input mode 760.

After the single input mode 760 is switched to the dual input mode 770, there is a need to provide the second image sensor 152 with the power signal and the control signal and there is a need for an initialization time. In this case, before the second image data is streamed, a delay time (e.g., shutter lag) including a power input interval 771, an initialization interval 772, and a streaming standby interval 773 may occur.

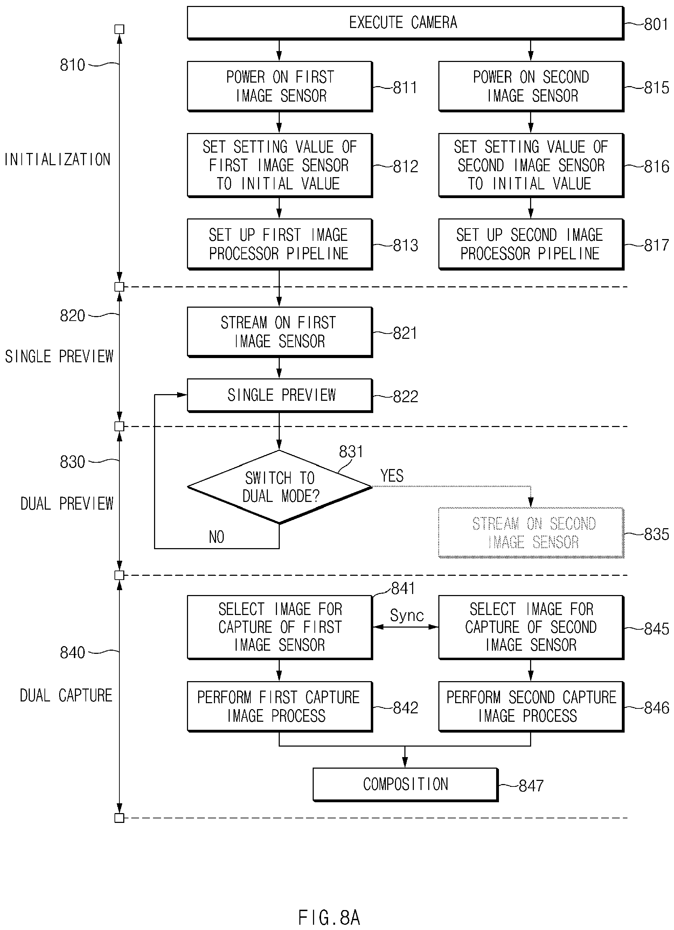

FIG. 8A is a flowchart for describing a streaming restriction state of a second image sensor, according to an embodiment of the present disclosure.

Referring to FIG. 8A, unlike FIGS. 7A and 7B, the controller 230 may supply power and control signals to the second image sensor 152 in a single input mode but may restrict streaming associated with image data.

In an initialization step 810, the controller 230 performs default setting for collecting first image data through the first image sensor 151 and the first pipeline 210 in step 811, step 812, and step 813. In addition, in step 815, step 816, and step 817, the controller 230 performs default setting for collecting second image data through the second image sensor 152 and the second pipeline 220.

In a single preview step 820, the first image sensor 151 streams the first image data through the first pipeline 210 in step 821. The first image data may be transmitted to the controller 230 through the first pipeline 210. In step 822, the controller 230 generates a single preview image based on the first image data and outputs the single preview image to the display 110.

The second image sensor 152 may be in a state where power is supplied. However, the second image sensor 152 may be in a state where streaming is restricted. Until a separate streaming start signal is provided, the second image sensor 152 may be in a state where the second image data is not streamed.

In a dual preview step 830, the controller 230 determines whether a switch condition (e.g., a brightness condition, a zoom step condition, or the like) for switching from the single mode to the dual mode is satisfied, in step 831. If it is determined that the switch condition is satisfied, the controller 230 may provide the second image sensor 152 with the streaming start signal. In step 835, the second image sensor 152 streams the second image data through the second pipeline 220 depending on a streaming start signal. The controller 230 may generate a dual preview image based on the first image data and the second image data and may output the dual preview image to the display 110.

The operation of the controller 230 in a dual capture step 840, with steps 841-847, may be the same as that of the controller 230 in the dual capture step 740 of FIG. 7A, with steps 741-747.

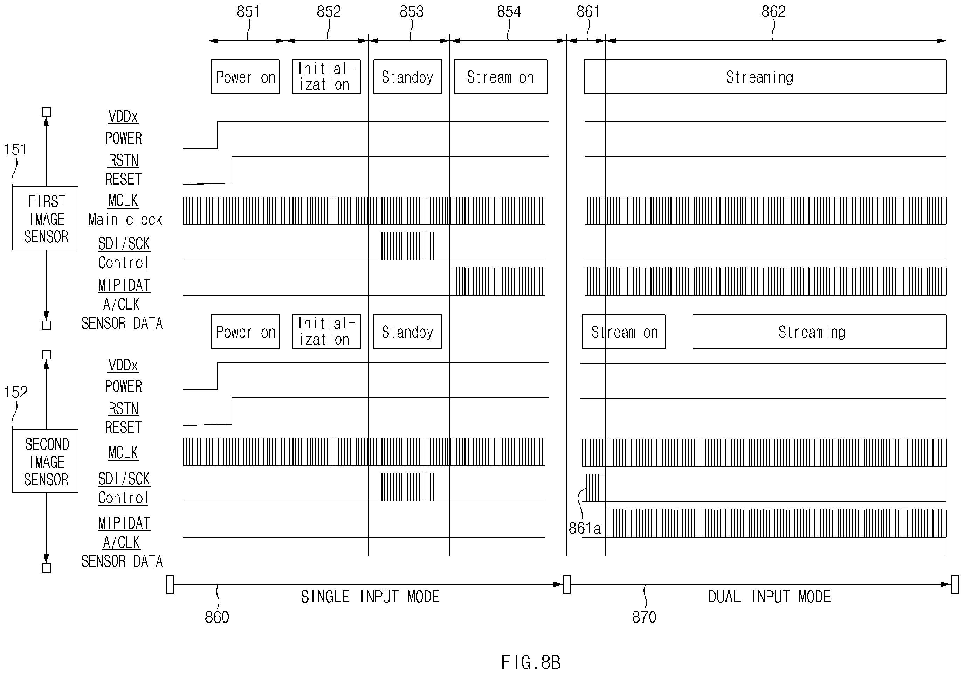

FIG. 8B is a signal flow diagram in a streaming restriction state of a second image sensor, according to an embodiment of the present disclosure.

Referring to FIG. 8B, in an interval of a single input mode 860, unlike FIGS. 7A and 7B, the controller 230 may provide each of the first image sensor 151 and the second image sensor 152 with a power signal VDDx and control signals MCLK, RSTN, and SDI/SCK Control.

The first image sensor 151 may start streaming through a power input interval 851, an initialization interval 852, a streaming standby interval 853, and a streaming interval 854.

On the other hand, the second image sensor 152 may be in a state where the power signal VDDx and the control signals MCLK, RSTN, and SDI/SCK Control are input. However, until a separate streaming start signal occurs, the second image sensor 152 may be in a state where streaming MIPIDATA/CLK is restricted. The current consumption may be reduced through streaming restriction of the second image sensor 152 in the single input mode 860.

In an interval of a dual input mode 870, the first image sensor 151 may continuously stream the first image data. In a streaming start interval 861, in the case where a streaming start signal 861a is input, the state of the second image sensor 152 may be switched to a state where the streaming MIPIDATA/CLK occurs. In a streaming interval 862, the second image sensor 152 may start the streaming.

After the single input mode 860 is switched to the dual input mode 870, there may be a need to provide the streaming start signal to the second image sensor 152. In this case, the delay time of the streaming start interval 861 may occur.

The current consumption of the case where the second image sensor 152 maintains a streaming restriction state in FIGS. 8A and 8B may increase more than that of the case where the second image sensor 152 maintains a power-off state in FIGS. 7A and 7B. However, the delay time of the case where the second image sensor 152 maintains a streaming restriction state in FIGS. 8A and 8B may decrease more than that of the case where the second image sensor 152 maintains a power-off state in FIGS. 7A and 7B.

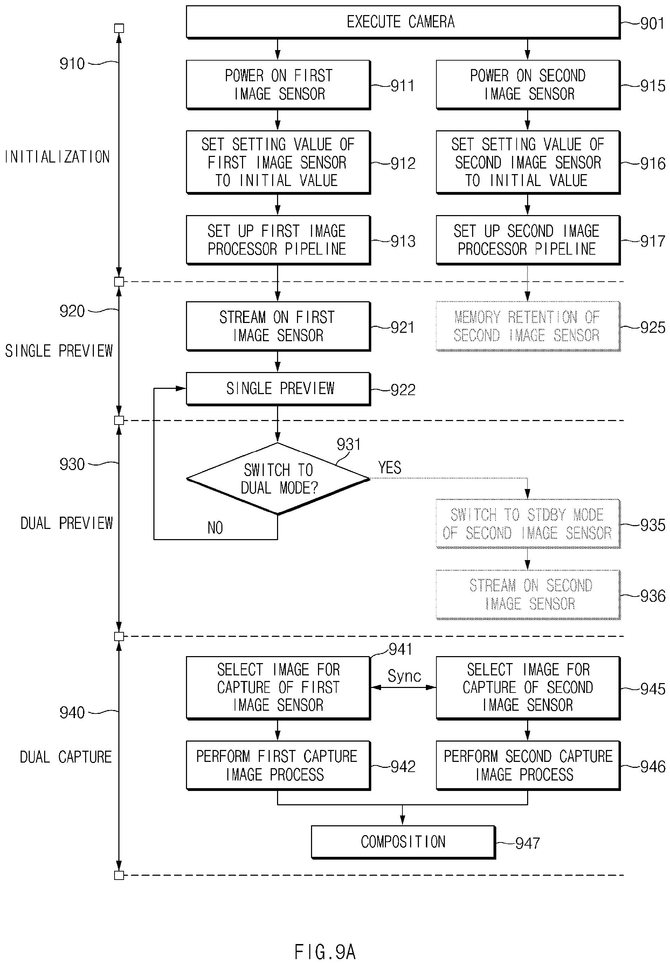

FIG. 9A is a flowchart illustrating a method for controlling a second image sensor by using a retention mode, according to an embodiment of the present disclosure.

Referring to FIG. 9A, in the single input mode, the controller 230 may provide power and control signals to the second image sensor 152, and the controller 230 may allow the second image sensor 152 to operate in a retention mode in a partial interval, thereby reducing the current consumption. The retention mode may be a state where minimal power for storing internal settings values of the second image sensor 152 is supplied.

In an initialization step 910, the controller 230 performs default setting for collecting first image data through the first image sensor 151 and the first pipeline 210 in step 911, step 912, and step 913. In addition, in step 915, step 916, and step 917, the controller 230 performs default setting for collecting second image data through the second image sensor 152 and the second pipeline 220.

In a single preview step 920, the first image sensor 151 streams the first image data through the first pipeline 210 in step 921. The first image data may be transmitted to the controller 230 through the first pipeline 210. In step 922, the controller 230 generates a single preview image based on the first image data and outputs the single preview image to the display 110. In step 925, the second image sensor 152 enters the retention mode in a state where power is supplied.

In a dual preview step 930, the controller 230 determines whether a switch condition (e.g., a brightness condition, a zoom step condition, or the like) for switching from the single mode to the dual mode is satisfied, in step 931. If it is determined that the switch condition is satisfied, the controller 230 may end the retention mode of the second image sensor 152. The controller 230 may supply a power signal and a control signal to the whole second image sensor 152. In step 935, the second image sensor 152 enters a standby mode. In step 936, the second image sensor 152 streams the second image data through the second pipeline 220. The controller 230 may generate a dual preview image based on the first image data and the second image data and may output the dual preview image to the display 110.

The operation of the controller 230 in a dual capture step 940, with steps 941-947, may be the same as that of the controller 230 in the dual capture step 740 of FIG. 7A, with steps 741-747.

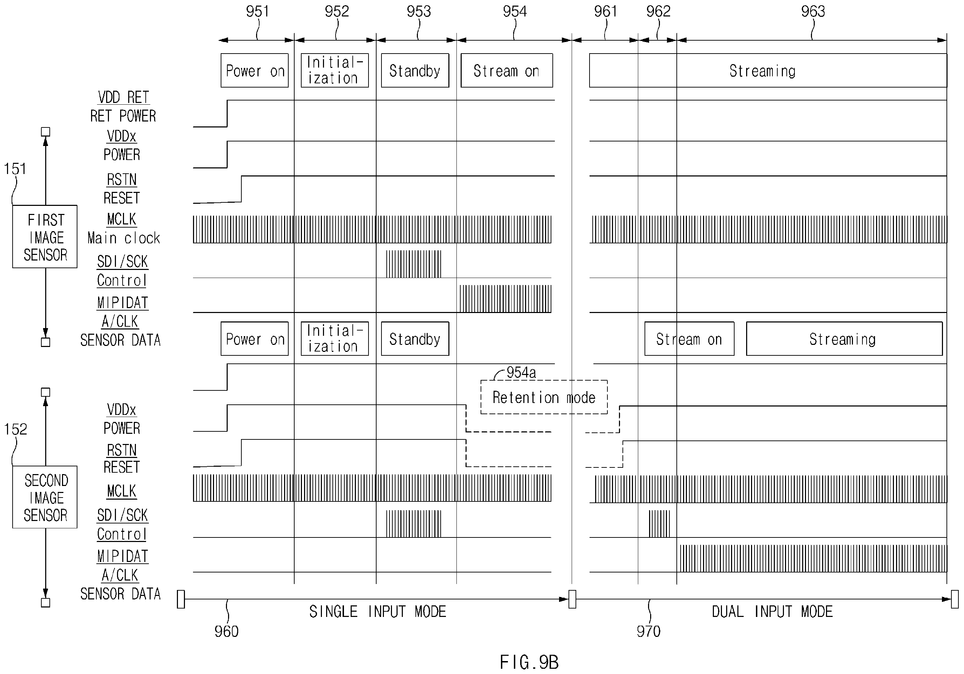

FIG. 9B is a signal flow diagram in a retention mode of a second image sensor, according to an embodiment of the present disclosure.

Referring to FIG. 9B, in an interval of a single input mode 960, the controller 230 may provide the first image sensor 151 and the second image sensor 152 with retention power VDD_RET, a power signal VDDx, and control signals MCLK, RSTN, and SDI/SCK Control.

The first image sensor 151 may start streaming through a power input interval 951, an initialization interval 952, a streaming standby interval 953, and a streaming interval 954.

In a power input interval 951, the clock signal MCLK may be input to each of the first image sensor 151 and the second image sensor 152 with a specified period, and the retention power VDD_RET and the power signal VDDx may be changed from a low state to a high state.

In a streaming interval 954, the first image sensor 151 may stream first image data. The first image data may be transmitted to the controller 230 through the first pipeline 210.

On the other hand, the second image sensor 152 may enter a retention mode. In a retention mode interval 954a, the retention power VDD_RET may maintain the high state, and the power signal VDDx and the control signals MCLK, RSTN, and SDI/SCK Control may be in the low state. The controller 230 may interrupt sensor core power, sensor I/O power, sensor analog power, and the like other than the retention power VDD_RET, thereby reducing current consumption. The retention power VDD_RET may be used only to store the internal settings values of the second image sensor 152.

In an interval of a dual input mode 970, the first image sensor 151 may continuously stream the first image data. In the case where a switch condition (e.g., a brightness condition, a zoom step condition, or the like) for switching from a single mode to a dual mode is satisfied, the controller 230 may end the retention mode of the second image sensor 152, and may change the level of the power signal VDDx of the second image sensor 152 into the high state. The controller 230 may provide the control signals MCLK, RSTN, and SDI/SCK Control such that streaming starts.

In the case where the second image sensor 152 operates in the retention mode, the delay time including the retention end interval 961 and the streaming start interval 962 may occur. In a streaming interval 963, the second image sensor 152 may start the streaming.

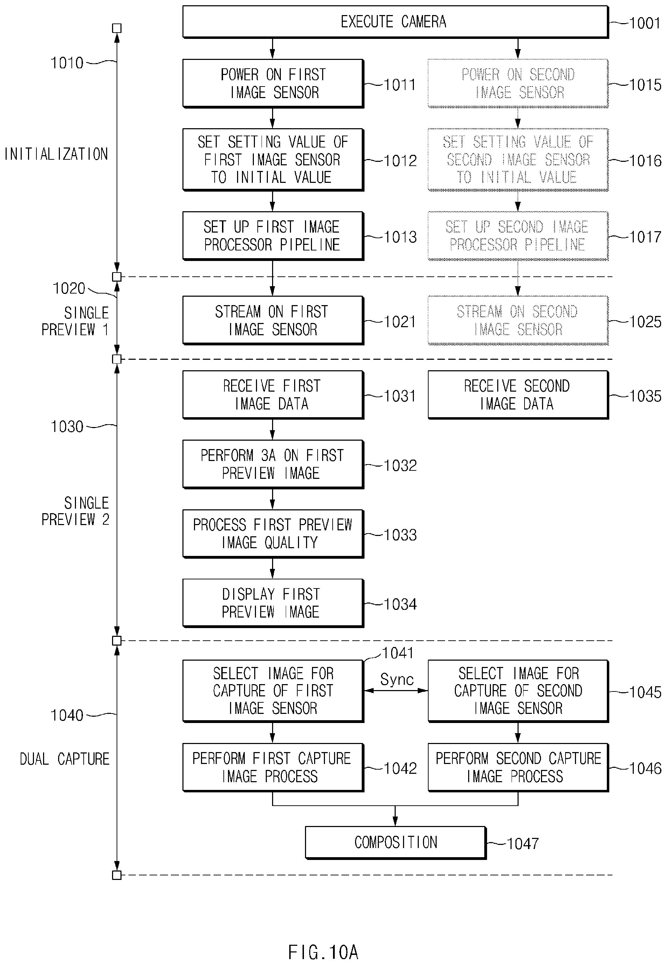

FIG. 10A is a flowchart illustrating a method for controlling a second image data through control of a pipeline, according to an embodiment of the present disclosure.

Referring to FIG. 10A, in the single input mode, the controller 230 may supply power and control signals to the first image sensor 151 and the second image sensor 152, and may restrict the partial function of the second pipeline 220.

In an initialization step 1010, the controller 230 performs default setting for collecting first image data through the first image sensor 151 and the first pipeline 210 in step 1011, step 1012, and step 1013. In addition, in step 1015, step 1016, and step 1017, the controller 230 may perform default setting for collecting second image data through the second image sensor 152 and the second pipeline 220.

In a single preview step 1 1020 and a single preview step 2 1030, the first image sensor 151 streams the first image data through the first pipeline 210 in step 1021. The first image data may be transmitted to the controller 230 through the first pipeline 210. In step 1031, the first pipeline 210 receives the first image data. In step 1032 and step 1033, the first pipeline 210 performs a 3A (e.g., AF, AE, and AWB) task, image processing, or the like. In step 1034, the controller 230 outputs a single preview image to the display 110.

On the other hand, the controller 230 may activate the image receiving unit 221 among the image receiving unit 221, the pre-processor 222, the auto-processor 223, the ISP 224, or the post-processor 225 of the second pipeline 220, and other elements thereof may maintain an inactive state. In step 1025, the second image sensor 152 may continuously collect second image data, and the image receiving unit 221 of the second pipeline 220 may continuously receive the second image data. In step 1035, since a part of elements of the second pipeline 220 is deactivated, the second image data may not be transmitted through the second pipeline 220. According to various embodiments, the image receiving unit 221 of the second pipeline 220 may store the received second image data in a buffer or a memory.

In a dual preview step 1040, the controller 230 may determine whether a switch condition (e.g., a brightness condition, a zoom step condition, or the like) for switching from the single mode to the dual mode is satisfied. If it is determined that the switch condition is satisfied, the controller 230 may change states of all the elements of the second pipeline 220 into an active state.

In the case where a user input (e.g., a screen touch, a button input, a gesture input, or the like) for capturing an image occurs, the controller 230 selects images captured by each of image sensors in step 1041 and step 1045. In step 1042 and step 1046, the controller 230 synchronizes a first capture image captured by the first image sensor 151 and a second capture image captured by the second image sensor 152, and performs image processing through each of pipelines.

In step 1047, the controller 230 generates the combined image (e.g., a photo or a video) by combining the processed first capture image and the processed second capture image.

In a single input mode, the controller 230 may deactivate the pre-processor 222, the auto-processor 223, the ISP 224, and the post-processor 225 of the second pipeline 220, thereby reducing current consumption. In this case, since the second image sensor 152 continuously collects second image data, and the image receiving unit 221 of the second pipeline 220 continuously receives the second image data, delay time may be relatively reduced.

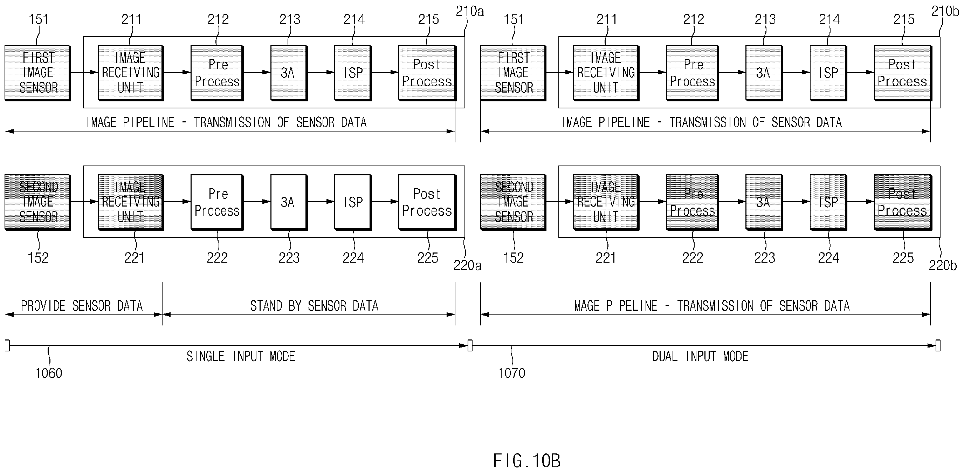

FIG. 10B is a signal flow diagram for describing control of second image data through control of a pipeline, according to an embodiment of the present disclosure.

Referring to FIG. 10B, in an interval of a single input mode 1060, the controller 230 may allow streaming MIPIDATA/CLK to be generated, by providing a power signal VDDx and control signals MCLK, RSTN, and SDI/SCK Control to each of the first image sensor 151 and the second image sensor 152.

The controller 230 may allow first image data to be transmitted to the controller 230, by activating all the elements of a first pipeline 210a. On the other hand, the controller 230 may prevent second image data from being transmitted to the controller 230, by deactivating a part of the elements of a second pipeline 220a.

In an interval of a dual input mode 1070, the controller 230 may allow the first image data and the second image data to be streamed, by activating all elements of a first pipeline 210b and a second pipeline 220b.

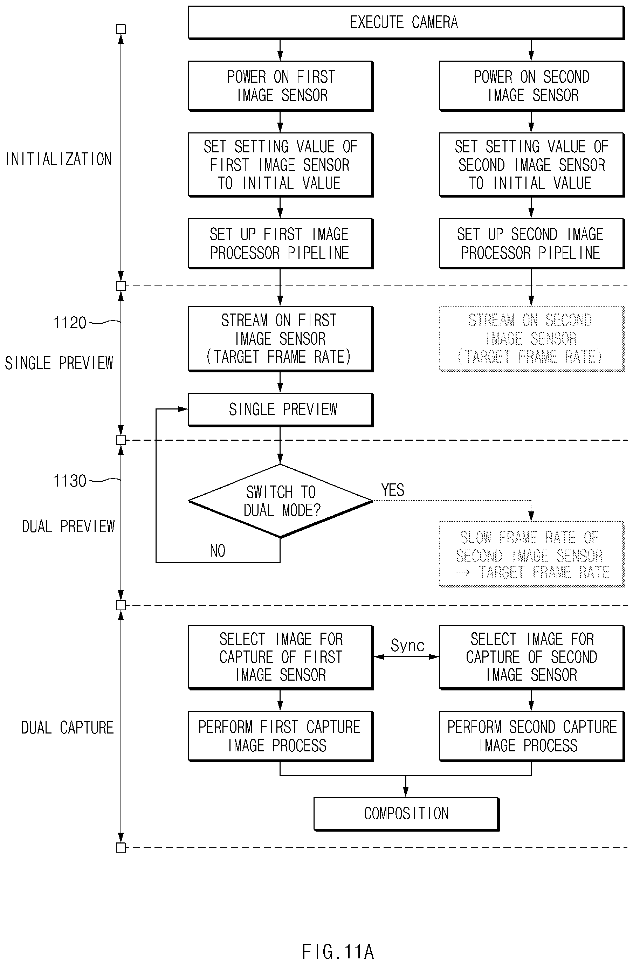

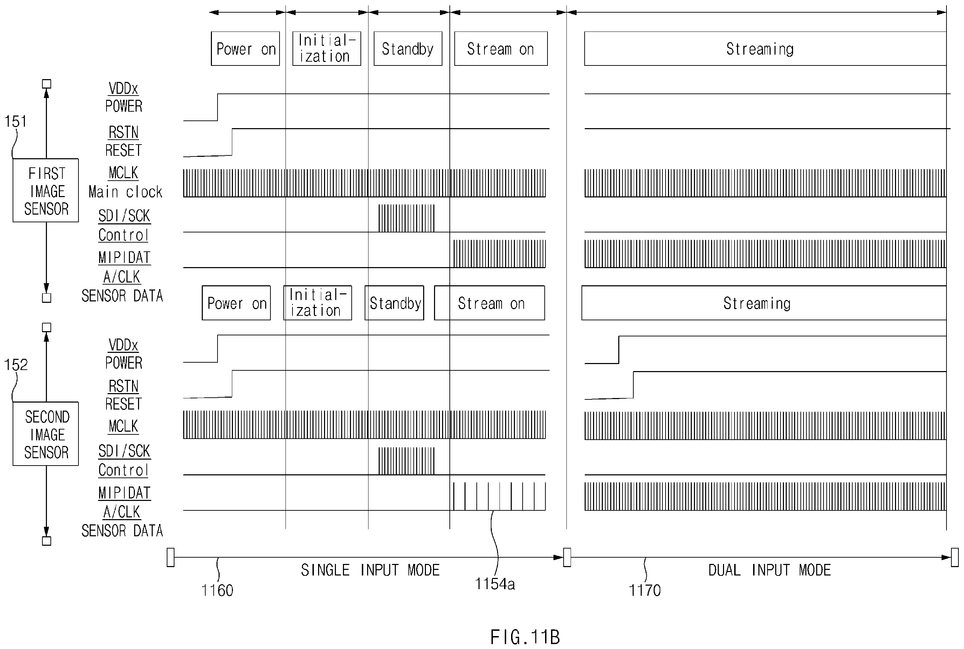

FIGS. 11A and 11B are a flowchart and a signal flow diagram for describing control of a second image sensor by changing a frame rate, according to an embodiment of the present disclosure.

Referring to FIGS. 11A and 11B, in single input modes 1120 and 1160, the controller 230 may lower a frame rate of second image data collected through the second image sensor 152, thereby reducing current consumption. In the single input modes 1120 and 1160, a frame rate 1154a of the second image data may be lower than that of first image data.

In dual input modes 1130 and 1170, the controller 230 may increase the frame rate of the second image data collected through the second image sensor 152 to be the same as a target frame rate, thereby improving the quality of a photo or a video. According to various embodiments, the changed frame rate of the second image data may be the same as that of the first image data.

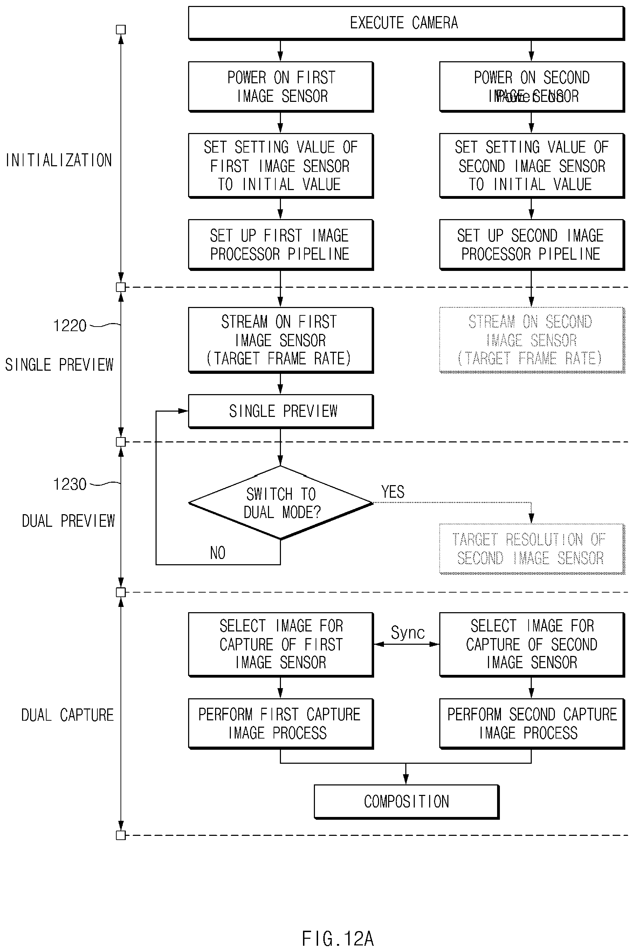

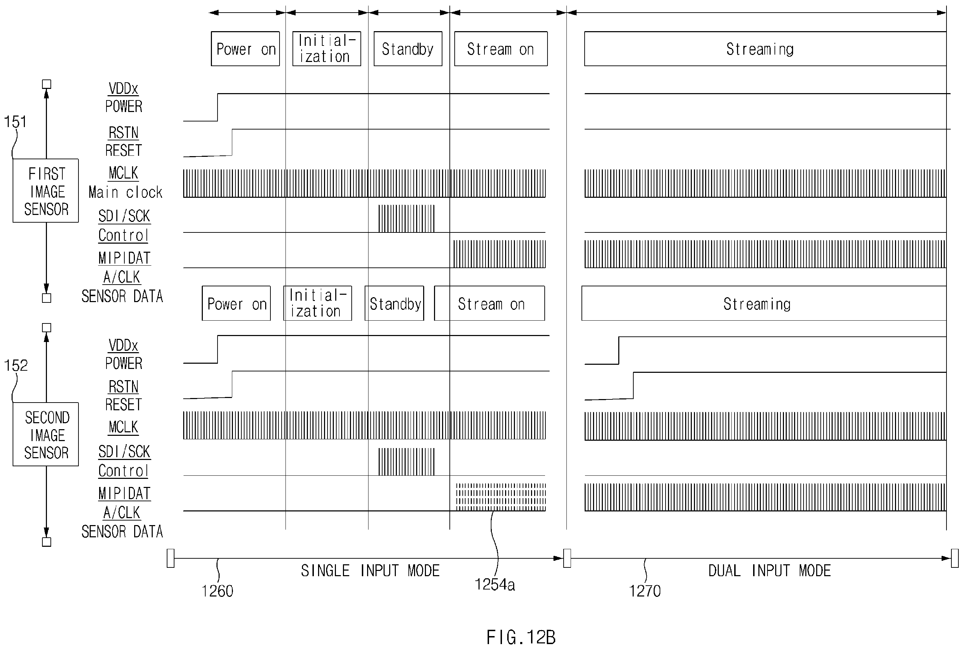

FIGS. 12A and 12B are a flowchart and a signal flow diagram for describing control of a second image sensor by changing a resolution, according to an embodiment of the present disclosure.

Referring to FIGS. 12A and 12B, in single input modes 1220 and 1260, the controller 230 may lower the resolution of second image data collected through the second image sensor 152, thereby reducing current consumption. A resolution 1254a of the second image data may be less than the resolution of first image data.

In dual input modes 1230 and 1270, the controller 230 may increase the resolution of the second image data collected through the second image sensor 152 to be the same as a target resolution, thereby improving the quality of a photo or a video. The changed resolution of the second image data may be the same as the resolution of the first image data.

According to various embodiments, a camera controlling method is performed by an electronic device including a first image sensor and a second image sensor, the method may include collecting image data by using one of the first image sensor and the second image sensor and allowing the other to maintain a specified power restricted state, verifying a first condition associated with information extracted from first image data collected by the first image sensor or second image data collected by the second image sensor, a second condition associated with sensing information collected by a sensor module included in the electronic device, and a third condition associated with a zoom characteristic of a lens mounted in each of the first image sensor and the second image sensor, and collecting image data by using both the first image sensor and the second image sensor if at least one of the first condition, the second condition, or the third condition is satisfied.

Verifying the first condition includes comparing brightness information, which is extracted from one of the first image data or the second image data, with a preset threshold value.

Verifying the second condition includes collecting sensing information about gesture of a user or proximity of the user, and comparing the sensing information with a preset threshold value.

Verifying the third condition includes comparing a zoom step of a dual camera with a preset threshold value.

Verifying the third condition includes comparing the zoom step with a first threshold value and a second threshold value greater than the first threshold value, respectively.

According to various embodiments, the method further includes allowing one of the first image sensor and the second image sensor to maintain a specified power restricted state if the first condition, the second condition, and the third condition are not satisfied.

Maintaining the specified power restricted state includes maintaining the power restricted state by interrupting a power signal of at least one of the first image sensor and the second image sensor.

Maintaining the specified power restricted state includes maintaining the power restricted state by transmitting a control signal for restricting streaming of image data of at least one of the first image sensor and the second image sensor.

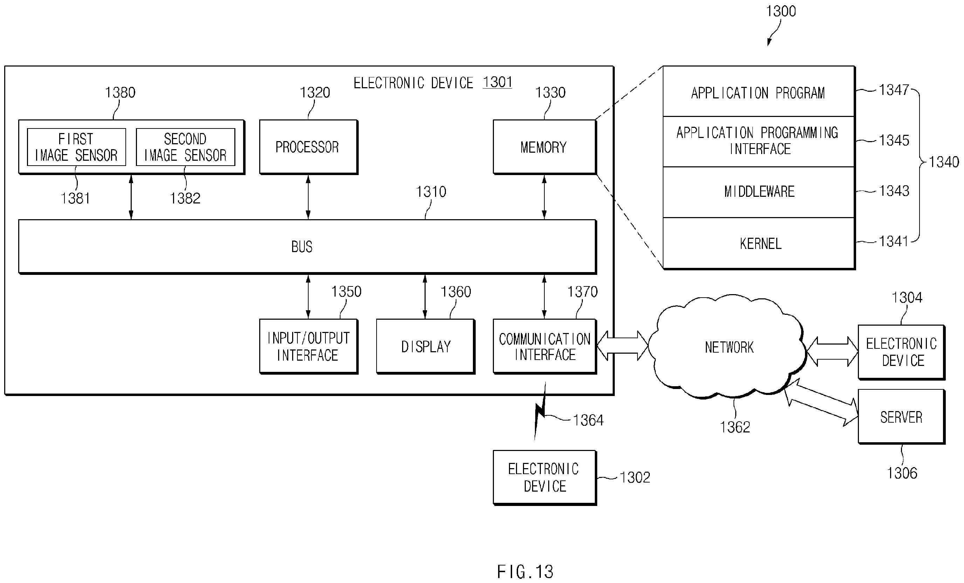

FIG. 13 is a diagram illustrating an electronic device in a network environment, according to an embodiment of the present disclosure.

An electronic device 1301 is provided in a network environment 1300. The electronic device 1301 includes a bus 1310, a processor 1320, a memory 1330, an input/output interface 1350, a display 1360, and a communication interface 1370. In various embodiments of the present disclosure, at least one of the foregoing elements may be omitted or another element may be added to the electronic device 1301.

The bus 1310 may include a circuit for connecting the above-mentioned elements 1310 to 1370 to each other and transferring communications (e.g., control messages and/or data) among the above-mentioned elements.

The processor 1320 may include at least one of a central processing unit (CPU), an application processor (AP), or a communication processor (CP). The processor 1320 may perform data processing or an operation related to communication and/or control of at least one of the other elements of the electronic device 1301.

The memory 1330 may include a volatile memory and/or a nonvolatile memory. The memory 1330 may store instructions or data related to at least one of the other elements of the electronic device 1301. According to an embodiment of the present disclosure, the memory 1330 may store software and/or a program 1340. The program 1340 may include, for example, a kernel 1341, a middleware 1343, an application programming interface (API) 1345, and/or an application program (or an application) 1347. At least a portion of the kernel 1341, the middleware 1343, or the API 1345 may be referred to as an operating system (OS).

The kernel 1341 may control or manage system resources (e.g., the bus 1310, the processor 1320, the memory 1330, or the like) used to perform operations or functions of other programs (e.g., the middleware 1343, the API 1345, or the application 1347). Furthermore, the kernel 1341 may provide an interface for allowing the middleware 1343, the API 1345, or the application 1347 to access individual elements of the electronic device 1301 in order to control or manage the system resources.

The middleware 1343 may serve as an intermediary so that the API 1345 or the application program 1347 communicates and exchanges data with the kernel 1341.

Furthermore, the middleware 1343 may handle one or more task requests received from the application 1347 according to a priority order. For example, the middleware 1343 may assign at least one application 1347 a priority for using the system resources (e.g., the bus 1310, the processor 1320, the memory 1330, or the like) of the electronic device 1301. For example, the middleware 1343 may handle the one or more task requests according to the priority assigned to the at least one application, thereby performing scheduling or load balancing with respect to the one or more task requests.

The API 1345, which is an interface for allowing the application 1347 to control a function provided by the kernel 1341 or the middleware 1343, may include, for example, at least one interface or function (e.g., instructions) for file control, window control, image processing, character control, or the like.

The input/output interface 1350 may serve to transfer an instruction or data input from a user or another external device to (an)other element(s) of the electronic device 1301. Furthermore, the input/output interface 1350 may output instructions or data received from (an)other element(s) of the electronic device 1301 to the user or another external device.

The display 1360 may include, for example, a liquid crystal display (LCD), a light-emitting diode (LED) display, an organic light-emitting diode (OLED) display, a microelectromechanical systems (MEMS) display, or an electronic paper display. The display 1360 may present various content (e.g., a text, an image, a video, an icon, a symbol, or the like) to the user. The display 1360 may include a touch screen, and may receive a touch, gesture, proximity or hovering input from an electronic pen or a part of a body of the user.

The communication interface 1370 may set communications between the electronic device 1301 and an external device (e.g., a first external electronic device 1302, a second external electronic device 1304, or a server 1306). For example, the communication interface 1370 may be connected to a network 1362 via wireless communications or wired communications so as to communicate with the external device (e.g., the second external electronic device 1304 or the server 1306).

The wireless communications may employ at least one of cellular communication protocols such as long-term evolution (LTE), LTE-advance (LTE-A), code division multiple access (CDMA), wideband CDMA (WCDMA), universal mobile telecommunications system (UMTS), wireless broadband (WiBro), or global system for mobile communications (GSM). The wireless communications may include, for example, a short-range communications 1364. The short-range communications may include at least one of wireless fidelity (Wi-Fi), Bluetooth, near field communication (NFC), magnetic stripe transmission (MST), or GNSS.

The MST may generate pulses according to transmission data and the pulses may generate electromagnetic signals. The electronic device 1301 may transmit the electromagnetic signals to a reader device such as a POS device. The POS device may detect the magnetic signals by using a MST reader and restore data by converting the detected electromagnetic signals into electrical signals.

The GNSS may include, for example, at least one of global positioning system (GPS), global navigation satellite system (GLONASS), BeiDou navigation satellite system (BeiDou), or Galileo, the European global satellite-based navigation system according to a use area or a bandwidth. Hereinafter, the term "GPS" and the term "GNSS" may be interchangeably used. The wired communications may include at least one of universal serial bus (USB), high definition multimedia interface (HDMI), recommended standard 832 (RS-232), plain old telephone service (POTS), or the like. The network 1362 may include at least one of telecommunications networks, for example, a computer network (e.g., local area network (LAN) or wide area network (WAN)), the Internet, or a telephone network.

The types of the first external electronic device 1302 and the second external electronic device 1304 may be the same as or different from the type of the electronic device 1301. According to an embodiment of the present disclosure, the server 1306 may include a group of one or more servers. A portion or all of operations performed in the electronic device 1301 may be performed in one or more other electronic devices (e.g., the first external electronic device 1302, the second external electronic device 1304, or the server 1306). When the electronic device 1301 should perform a certain function or service automatically or in response to a request, the electronic device 1301 may request at least a portion of functions related to the function or service from another device (e.g., the first external electronic device 1302, the second external electronic device 1304, or the server 1306) instead of or in addition to performing the function or service for itself. The other electronic device (e.g., the first external electronic device 1302, the second external electronic device 1304, or the server 1306) may perform the requested function or additional function, and may transfer a result of the performance to the electronic device 1301. The electronic device 1301 may use a received result itself or additionally process the received result to provide the requested function or service. To this end, for example, a cloud computing technology, a distributed computing technology, or a client-server computing technology may be used.

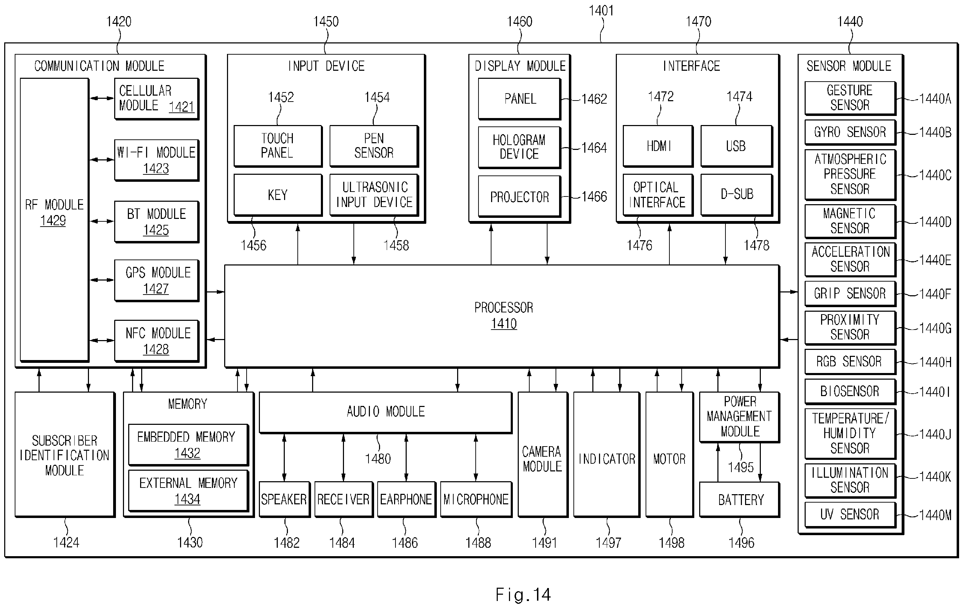

FIG. 14 is a block diagram illustrating an electronic device, according to an embodiment of the present disclosure.

Referring to FIG. 14, an electronic device 1401 may include, for example, a part or the entirety of the electronic device 1301 illustrated in FIG. 13. The electronic device 1401 includes at least one processor (e.g., AP) 1410, a communication module 1420, a subscriber identification module (SIM) 1424, a memory 1430, a sensor module 1440, an input device 1450, a display 1460, an interface 1470, an audio module 1480, a camera module 1491, a power management module 1495, a battery 1496, an indicator 1497, and a motor 1498.

The processor 1410 may run an operating system or an application program so as to control a plurality of hardware or software elements connected to the processor 1410, and may process various data and perform operations. The processor 1410 may be implemented with, for example, a system on chip (SoC). According to an embodiment of the present disclosure, the processor 1410 may further include a graphic processing unit (GPU) and/or an image signal processor. The processor 1410 may include at least a portion (e.g., a cellular module 1421) of the elements illustrated in FIG. 14. The processor 1410 may load, on a volatile memory, an instruction or data received from at least one of other elements (e.g., a nonvolatile memory) to process the instruction or data, and may store various data in a nonvolatile memory.

The communication module 1420 may have a configuration that is the same as or similar to that of the communication interface 1370 of FIG. 13. The communication module 1420 includes, for example, a cellular module 1421, a Wi-Fi module 1423, a Bluetooth (BT) module 1425, a GPS module 1427, an NFC module 1428, and a radio frequency (RF) module 1429.

The cellular module 1421 may provide, for example, a voice call service, a video call service, a text message service, or an Internet service through a communication network. The cellular module 1421 may identify and authenticate the electronic device 1401 in the communication network using the subscriber identification module 1424 (e.g., a SIM card). The cellular module 1421 may perform at least a part of functions that may be provided by the processor 1410. The cellular module 1421 may include a communication processor (CP).

Each of the Wi-Fi module 1423, the Bluetooth module 1425, the GPS module 1427 and the NFC module 1428 may include, for example, a processor for processing data transmitted/received through the modules. According to some various embodiments of the present disclosure, at least a part (e.g., two or more) of the cellular module 1421, the Wi-Fi module 1423, the Bluetooth module 1425, the GPS module 1427, and the NFC module 1428 may be included in a single integrated chip (IC) or IC package.

The RF module 1429 may transmit/receive, for example, communication signals (e.g., RF signals). The RF module 1429 may include, for example, a transceiver, a power amp module (PAM), a frequency filter, a low noise amplifier (LNA), an antenna, or the like. According to another embodiment of the present disclosure, at least one of the cellular module 1421, the Wi-Fi module 1423, the Bluetooth module 1425, the GPS module 1427, or the NFC module 1428 may transmit/receive RF signals through a separate RF module.

The SIM 1424 may include, for example, an embedded SIM and/or a card containing the subscriber identity module, and may include unique identification information (e.g., an integrated circuit card identifier (ICCID)) or subscriber information (e.g., international mobile subscriber identity (IMSI)).

The memory 1430 (e.g., the memory 1330) includes, for example, an internal memory 1432 and/or an external memory 1434. The internal memory 1432 may include at least one of a volatile memory (e.g., a dynamic RAM (DRAM), a static RAM (SRAM), a synchronous dynamic RAM (SDRAM), or the like), a nonvolatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, a NOR flash memory, or the like)), a hard drive, or a solid state drive (SSD).

The external memory 1434 may include a flash drive such as a compact flash (CF), a secure digital (SD), a Micro-SD, a Mini-SD, an extreme digital (xD), a MultiMediaCard (MMC), a memory stick, or the like. The external memory 1434 may be operatively and/or physically connected to the electronic device 1401 through various interfaces.

The sensor module 1440 may, for example, measure physical quantity or detect an operation state of the electronic device 1401 so as to convert measured or detected information into an electrical signal. The sensor module 1440 includes, for example, at least one of a gesture sensor 1440A, a gyro sensor 1440B, a barometric pressure sensor 1440C, a magnetic sensor 1440D, an acceleration sensor 1440E, a grip sensor 1440F, a proximity sensor 1440G, a color sensor 1440H (e.g., a red/green/blue (RGB) sensor), a biometric sensor 1440I, a temperature/humidity sensor 1440J, an illumination sensor 1440K, or an ultraviolet (UV) sensor 1440M. Additionally or alternatively, the sensor module 1440 may include, for example, an olfactory sensor (E-nose sensor), an electromyography (EMG) sensor, an electroencephalogram (EEG) sensor, an electrocardiogram (ECG) sensor, an infrared (IR) sensor, an iris recognition sensor, and/or a fingerprint sensor. The sensor module 1440 may further include a control circuit for controlling at least one sensor included therein. In some various embodiments of the present disclosure, the electronic device 1401 may further include a processor configured to control the sensor module 1440 as a part of the processor 1410 or separately, so that the sensor module 1440 is controlled while the processor 1410 is in a sleep state.

The input device 1450 includes, for example, a touch panel 1452, a (digital) pen sensor 1454, a key 1456, and/or an ultrasonic input device 1458. The touch panel 1452 may employ at least one of capacitive, resistive, infrared, and ultraviolet sensing methods. The touch panel 1452 may further include a control circuit. The touch panel 1452 may further include a tactile layer so as to provide a haptic feedback to a user.

The (digital) pen sensor 1454 may include, for example, a sheet for recognition which is a part of a touch panel or is separate. The key 1456 may include, for example, a physical button, an optical button, or a keypad. The ultrasonic input device 1458 may sense ultrasonic waves generated by an input tool through a microphone 1488 so as to identify data corresponding to the ultrasonic waves sensed.

The display 1460 (e.g., the display 1360) includes a panel 1462, a hologram device 1464, and/or a projector 1466. The panel 1462 may have a configuration that is the same as or similar to that of the display 1360 of FIG. 13. The panel 1462 may be, for example, flexible, transparent, or wearable. The panel 1462 and the touch panel 1452 may be integrated into a single module. The hologram device 1464 may display a stereoscopic image in a space using a light interference phenomenon. The projector 1466 may project light onto a screen so as to display an image. The screen may be disposed in the inside or the outside of the electronic device 1401. According to an embodiment of the present disclosure, the display 1460 may further include a control circuit for controlling the panel 1462, the hologram device 1464, or the projector 1466.

The interface 1470 may include, for example, an HDMI 1472, a USB 1474, an optical interface 1476, or a D-subminiature (D-sub) 1478. The interface 1470, for example, may be included in the communication interface 1370 illustrated in FIG. 13. Additionally or alternatively, the interface 1470 may include, for example, a mobile high-definition link (MHL) interface, an SD card/multi-media card (MMC) interface, or an infrared data association (IrDA) interface.

The audio module 1480 may convert, for example, a sound into an electrical signal or vice versa. At least a portion of elements of the audio module 1480 may be included in the input/output interface 1350 illustrated in FIG. 13. The audio module 1480 may process sound information input or output through a speaker 1482, a receiver 1484, an earphone 1486, or the microphone 1488.

The camera module 1491 is, for example, a device for shooting a still image or a video. According to an embodiment of the present disclosure, the camera module 1491 may include at least one image sensor (e.g., a front sensor or a rear sensor), a lens, an image signal processor (ISP), or a flash (e.g., an LED or a xenon lamp).

The power management module 1495 may manage power of the electronic device 1401. The power management module 1495 may include a power management integrated circuit (PMIC), a charger integrated circuit (IC), and a battery gauge. The PMIC may employ a wired and/or wireless charging method. The wireless charging method may include, for example, a magnetic resonance method, a magnetic induction method, an electromagnetic method, or the like. An additional circuit for wireless charging, such as a coil loop, a resonant circuit, a rectifier, or the like, may be further included. The battery gauge may measure, for example, a remaining capacity of the battery 1496 and a voltage, current or temperature thereof while the battery is charged. The battery 1496 may include, for example, a rechargeable battery and/or a solar battery.

The indicator 1497 may display a specific state of the electronic device 1401 or a part thereof (e.g., the processor 1410), such as a booting state, a message state, a charging state, or the like. The motor 1498 may convert an electrical signal into a mechanical vibration, and may generate a vibration or haptic effect. Although not illustrated, a processing device (e.g., a GPU) for supporting a mobile TV may be included in the electronic device 1401. The processing device for supporting a mobile TV may process media data according to the standards of digital multimedia broadcasting (DMB), digital video broadcasting (DVB), MediaFLO™, or the like.

Each of the elements described herein may be configured with one or more components, and the names of the elements may be changed according to the type of an electronic device. In various embodiments of the present disclosure, an electronic device may include at least one of the elements described herein, and some elements may be omitted or other additional elements may be added. Furthermore, some of the elements of the electronic device may be combined with each other so as to form one entity, so that the functions of the elements may be performed in the same manner as before the combination.

According to various embodiments, an electronic device may include a memory, a display, a sensor module configured to sense an internal or external state of the electronic device, a dual camera including a first image sensor and a second image sensor to be spaced apart from each other by a specified distance, a first pipeline configured to process first image data collected by the first image sensor, a second pipeline configured to process second image data collected by the second image sensor, and a controller configured to process the first image data and the second image data, wherein the controller allows at least one of the first image sensor and the second image sensor to maintain a power restricted state based on at least one of a first condition associated with information extracted from the first image data or the second image data, a second condition associated with sensing information collected by the sensor module, and a third condition associated with a zoom characteristic of a lens mounted in each of the first image sensor and the second image sensor.

The first condition includes a condition in which brightness information, which is extracted from one of the first image data or the second image data, is compared with a preset threshold value.

The sensor module collects sensing information about gesture of a user or proximity of the user, and the second condition includes a condition in which the sensing information is compared with a preset threshold value.

The first image sensor includes a first zoom lens, wherein the second image sensor includes a second zoom lens, and wherein the third condition is determined based on a zoom step of the dual camera.

The first zoom lens includes a wide-angle lens, and the second zoom lens includes a telephoto lens.

The controller compares the zoom step with a first threshold value and a second threshold value greater than the first threshold value, respectively.

The controller operates in a single input mode by using the first image sensor if the zoom step is less than the first threshold value, operates in a dual input mode by using the first image sensor and the second image sensor if the zoom step is greater than the first threshold value and is less than the second threshold value, and operates in the single input mode by using the second image sensor if the zoom step is greater than the second threshold value.

The controller maintains the power restricted state by interrupting a power signal of at least one of the first image sensor and the second image sensor.

The controller maintains the power restricted state by transmitting a control signal for restricting streaming of image data of at least one of the first image sensor and the second image sensor.

The controller maintains the power restricted state by interrupting power during a specified time period after the power is supplied to at least one of the first image sensor and the second image sensor.

The controller allows both the first image sensor and the second image sensor to be powered, and maintains the power restricted state by restricting transmission of image data of at least one of the first pipeline or the second pipeline.

The controller allows both the first image sensor and the second image sensor to be powered, and maintains the power restricted state by restricting a resolution or a frame output rate of one of the first image data or the second image data such that the resolution or the frame output rate is not greater than a specified value.

The term "module", as used herein, may represent, for example, a unit including one of hardware, software, firmware, or a combination thereof. The term "module" may be interchangeably used with the terms "unit", "logic", "logical block", "component" and "circuit". A module may be a minimum unit of an integrated component or may be a part thereof. A module may be a minimum unit for performing one or more functions or a part thereof. A module may be implemented mechanically or electronically. For example, a module may include at least one of an application-specific integrated circuit (ASIC) chip, a field-programmable gate array (FPGA), and a programmable-logic device for performing some operations, which are known or will be developed.

At least a part of devices (e.g., modules or functions thereof) or methods (e.g., operations), according to various embodiments of the present disclosure, may be implemented as instructions stored in a computer-readable storage medium in the form of a program module. In the case where the instructions are performed by a processor (e.g., the processor 1320 of FIG. 13), the processor may perform functions corresponding to the instructions. The computer-readable storage medium may be, for example, the memory 1330 of FIG. 13.

A computer-readable recording medium may include a hard disk, a floppy disk, a magnetic medium (e.g., a magnetic tape), an optical medium (e.g., CD-ROM, digital versatile disc (DVD)), a magneto-optical medium (e.g., a floptical disk), or a hardware device (e.g., a ROM, a RAM, a flash memory, or the like). The program instructions may include machine language codes generated by compilers and high-level language codes that can be executed by computers using interpreters. The above-mentioned hardware device may be configured to be operated as one or more software modules for performing operations of various embodiments of the present disclosure and vice versa.

A module or a program module, according to various embodiments of the present disclosure, may include at least one of the above-mentioned elements, or some elements may be omitted or other additional elements may be added. Operations performed by the module, the program module or other elements according to various embodiments of the present disclosure may be performed in a sequential, parallel, iterative or heuristic way. Furthermore, some operations may be performed in another order or may be omitted, or other operations may be added.

According to embodiments of the present disclosure, an electronic device including a dual camera may change the mode of the dual camera into a single mode or a dual mode depending on ambient environment, internal settings, or the like.

The electronic device including a dual camera may manage one image sensor in various power states, and thus the consumed current may be reduced or interrupted.

The electronic device including the dual camera may reduce current consumption and may increase a switching speed of the mode of the dual camera, and thus an image capturing speed may increase.

The above embodiments of the present disclosure are illustrative and not limitative. Various alternatives and equivalents are possible. Other additions, subtractions, or modifications are obvious in view of the present disclosure and are intended to fall within the scope of the appended claims.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a memory;
a display;
a sensor module configured to sense an internal state or an external state of the electronic device;
a dual camera including a first image sensor and a second image sensor;
a first pipeline configured to process first image data collected by the first image sensor;
a second pipeline configured to process second image data collected by the second image sensor; and
a controller configured to:
process the first image data and the second image data,
allow at least one of the first image sensor and the second image sensor to maintain a power restricted state based on at least one of a first condition associated with information extracted from the first image data or the second image data, a second condition associated with sensing information collected by the sensor module, and a third condition associated with a zoom characteristic of each of a plurality of lenses, a respective one of the plurality of lenses being mounted in each of the first image sensor and the second image sensor.

2. The electronic device of claim 1, wherein the first condition includes a condition in which brightness information, which is extracted from one of the first image data and the second image data, is compared with a preset threshold value.

3. The electronic device of claim 1, wherein:
the sensor module collects sensing information about a gesture of a user or a proximity of the user, and
the second condition includes a condition in which the sensing information is compared with a preset threshold value.

4. The electronic device of claim 1, wherein:
the first image sensor includes a first zoom lens,
the second image sensor includes a second zoom lens, and
the third condition is determined based on a zoom step of the dual camera.

5. The electronic device of claim 4, wherein:
the first zoom lens includes a wide-angle lens, and
the second zoom lens includes a telephoto lens.

6. The electronic device of claim 4, wherein the controller is further configured to compare the zoom step with a first threshold value and a second threshold value greater than the first threshold value, respectively.

7. The electronic device of claim 6, wherein the controller is further configured to operate in a single input mode by using the first image sensor if the zoom step is less than the first threshold value, operate in a dual input mode by using the first image sensor and the second image sensor if the zoom step is greater than the first threshold value and is less than the second threshold value, and operate in the single input mode by using the second image sensor if the zoom step is greater than the second threshold value.

8. The electronic device of claim 1, wherein the controller is further configured to maintain the power restricted state by interrupting a power signal of at least one of the first image sensor and the second image sensor.

9. The electronic device of claim 1, wherein the controller is further configured to maintain the power restricted state by transmitting a control signal for restricting streaming of image data of at least one of the first image sensor and the second image sensor.

10. The electronic device of claim 1, wherein the controller is further configured to maintain the power restricted state by interrupting power during a specified time period after the power is supplied to at least one of the first image sensor and the second image sensor.

11. The electronic device of claim 1, wherein the controller is further configured to allow both the first image sensor and the second image sensor to be powered, and maintain the power restricted state by restricting transmission of image data of at least one of the first pipeline or the second pipeline.

12. The electronic device of claim 1, wherein the controller is further configured to allows both the first image sensor and the second image sensor to be powered, and matintain the power restricted state by restricting a resolution or a frame output rate of one of the first image data or the second image data such that the resolution or the frame output rate is not greater than a specified value.

13. A camera controlling method performed by an electronic device including a first image sensor and a second image sensor, the method comprising:
collecting image data by using one of the first image sensor and the second image sensor and allowing the other of the first image sensor and the second image sensor to maintain a specified power restricted state;
verifying a first condition associated with information extracted from first image data collected by the first image sensor or second image data collected by the second image sensor, a second condition associated with sensing information collected by a sensor module included in the electronic device, and a third condition associated with a zoom characteristic of each of a plurality of lenses, a respective one of the plurality of lenses being mounted in each of the first image sensor and the second image sensor; and
collecting image data by using both the first image sensor and the second image sensor if at least one of the first condition, the second condition, or the third condition is satisfied.

14. The method of claim 13, wherein verifying the first condition comprises comparing brightness information, which is extracted from one of the first image data and the second image data, with a preset threshold value.

15. The method of claim 13, wherein verifying the second condition comprises:
collecting sensing information about a gesture of a user or a proximity of the user; and
comparing the sensing information with a preset threshold value.
